Europäisches Patentamt

European Patent Office

Office européen des brevets

(19)

(11) Numéro de publication : **0 344 050 B1**

(12)                    **FASCICULE DE BREVET EUROPEEN**

(45) Date de publication du fascicule du brevet :
31.07.91 Bulletin 91/31

(51) Int. Cl.⁵ : **F16L 33/02**

(21) Numéro de dépôt : **89401390.3**

(22) Date de dépôt : **22.05.89**

(54) Collier de serrage.

(30) Priorité : 25.05.88 FR 8806959

(43) Date de publication de la demande :
29.11.89 Bulletin 89/48

(45) Mention de la délivrance du brevet :
31.07.91 Bulletin 91/31

(84) Etats contractants désignés :
AT BE CH DE ES FR GB GR IT LI LU NL SE

(56) Documents cités :
EP-A- 0 236 217
FR-A- 2 523 260

(73) Titulaire : Etablissements CAILLAU
28, rue Ernest Renan
F-92130 Issy-les-Moulineaux (FR)

(72) Inventeur : Calmettes, Lionel
84, Faubourg d'Orléans
F-41200 Romorantin (FR)
Inventeur : André, Michel
140, rue du 8 mai
F-41200 Romorantin (FR)

(74) Mandataire : Descourtieux, Philippe et al
CABINET BEAU de LOMENIE 55 rue
d'Amsterdam
F-75008 Paris (FR)

## Description

On connaît, notamment par le brevet européen 3192, un collier de serrage comportant essentiellement une bande métallique enroulée sur elle-même. L'une des extrémités de la bande est conformée en crochet cependant que l'autre extrémité est pourvue d'une oreille saillante sensiblement radiale permettant l'agrafage du bord libre du crochet.

Les avantages de ce type de collier sont aujourd'hui bien connus, notamment sa facilité de montage et de démontage permettant sa réutilisation. Toutefois, il est apparu intéressant d'améliorer la sécurité de l'agrafage du collier, vis-à-vis en particulier des chocs accidentels sur le crochet, ce qui permet simultanément d'augmenter la facilité de sa mise en place et de démontage.

Selon une première caractéristique de l'invention, l'oreille présente un bossage sur sa face frontale servant d'appui au bord libre du crochet après agrafage. Ce bossage est situé, de préférence, sensiblement au milieu de la largeur de la bande. De son côté, le bord libre du crochet comporte une échancrure de forme complémentaire du bossage.

D'autre part, il est avantageux que la face du bossage la plus éloignée de la face frontale de l'oreille présente, mesurée dans le sens de la largeur de la bande du collier, une dimension relativement importante et de préférence voisine des deux tiers de cette largeur. Ainsi, la section du bossage, par un plan parallèle à un plan sensiblement tangent à la bande dans la région de l'oreille, aura une forme générale en T, dont la barre horizontale s'étend perpendiculairement à la bande.

Enfin, alors que le bossage présentera en général une surface supérieure axiale sensiblement parallèle à la bande, les surfaces supérieures des deux branches latérales seront avantageusement inclinées vers la base de l'oreille.

Grâce à ces dispositions, le bossage constitue tout d'abord une bonne zone d'appui pour l'outil de serrage tel qu'une "pince universelle", cependant que le crochet peut recouvrir l'oreille presque complètement de part et d'autre de son échancrure. En outre, après agrafage, le bossage, faisant saillie, au moins par sa portion axiale, au travers de l'échancrure du bord libre du crochet, protège ce dernier, au moins en partie, contre les chocs accidentels, par exemple de projectiles.

L'invention sera mieux comprise et diverses autres caractéristiques, ainsi que ses avantages, apparaîtront au cours de la description qui va suivre en référence au dessin annexé.

— La figure 1 représente une vue en perspective d'un collier de serrage selon l'invention, avant son serrage.

— La figure 2 représente une vue en coupe partielle du collier dans la région de l'oreille.

— Les figures 3 et 4 sont des vues respectivement analogues aux figures 1 et 2, d'une variante de réalisation de l'invention.

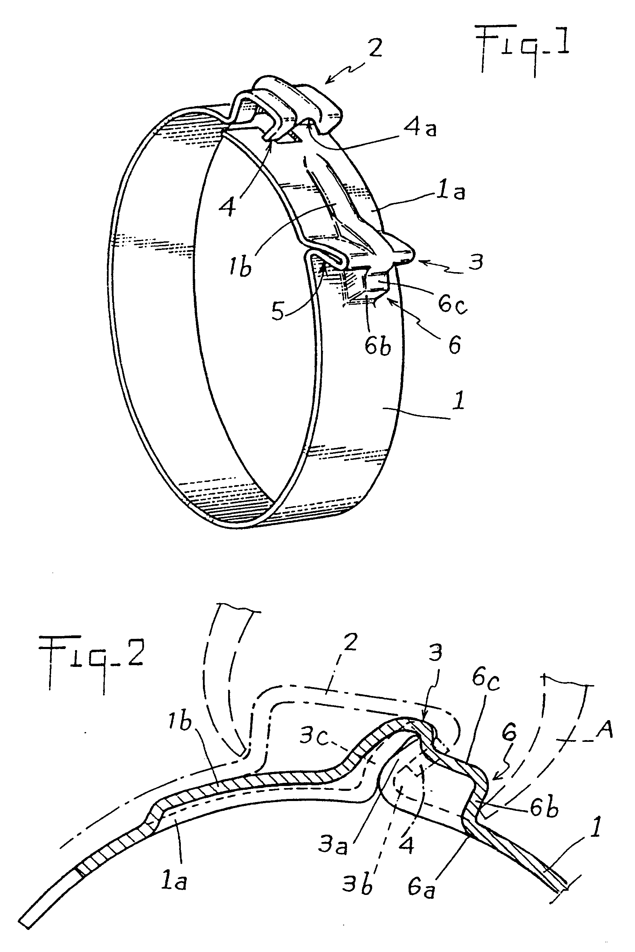

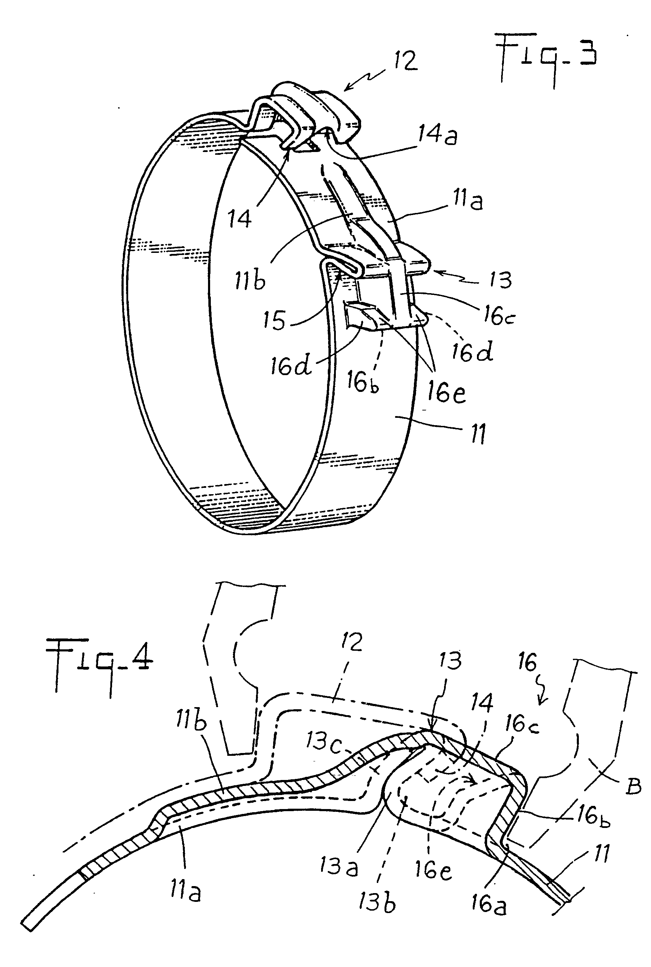

Si l'on se reporte tout d'abord aux figures 1 et 2, on voit un collier de serrage du type décrit dans le brevet européen 3192 ; la bande métallique 1 enroulée sur elle-même comporte un crochet 2 et une oreille 3 sensiblement radiale, derrière laquelle le bord libre 4 du crochet peut être agrafé au moyen d'un outil du genre pince.

Sur sa face frontale 5 servant d'appui au bord libre 4 du crochet, l'oreille 3 présente un bossage 6 faisant saillie par rapport au plan de l'oreille, dans le sens opposé à celui du crochet avant son agrafage. Ainsi qu'on le voit sur le dessin, le bossage est disposé sensiblement au milieu de la largeur de la bande 1, mais cette disposition n'est nullement obligatoire, en particulier s'il est jugé souhaitable, en raison des dimensions du collier et notamment de la largeur de la bande, de prévoir plusieurs bossages sur l'oreille.

En pratique, le bossage 6 sera généralement obtenu par emboutissage préalablement au pliage de l'oreille et présentera une forme analogue à celle visible en coupe sur la figure 2. Cette forme est remarquable en ce que le raccordement 6a du bossage à la bande 1 s'effectue sensiblement en avant (à droite sur la figure 2) du creux 3b du premier pli 3a de l'oreille, recevant l'extrémité du bord libre du crochet. De préférence, la face frontale 6b du bossage est sensiblement plane, s'étend transversalement et perpendiculairement à la bande 1, sur une hauteur voisine de celle de l'oreille 3 ; la surface supérieure axiale 6c du bossage est elle-même raccordée au sommet de l'oreille 3 suivant tout profil approprié.

De son côté, le bord libre 4 du crochet présente une échancrure 4a dont la forme est complémentaire de celle de la surface supérieure 6c du bossage 6 et qui constitue un logement pour ce dernier après agrafage du crochet sur l'oreille.

Au cours du serrage, la mâchoire A de l'outil représenté schématiquement en trait ponctué, prend appui essentiellement sur le bossage 6, au voisinage de son raccordement 6a à la bande et ne risque pas de gêner l'agrafage du bord libre 4 du crochet 2 sur l'oreille. De ce fait, ce bord libre peut être relativement long, ce qui améliore la sécurité de l'agrafage. De plus, après agrafage, la présence du bossage 6 faisant saillie à travers l'échancrure 4a constitue, tout à la fois, un élément du centrage du crochet sur l'oreille et un obstacle, au moins partiel, à l'action accidentelle d'un projectile dans la zone d'agrafage du crochet.

Ainsi qu'on le sait, notamment par le brevet européen 3192, le collier du genre qui vient d'être décrit comporte avantageusement, au-delà de l'oreille 3, un prolongement 1a de la bande destiné à assurer la continuité de la périphérie interne du collier après son serrage. Un tel prolongement se raccorde à la bande par l'intermédiaire de l'oreille 3 qui est alors constituée par deux plis 3a et 3c adossés l'un à l'autre, comme on le voit bien sur les dessins.

La face externe du prolongement 1a présente une nervure 1b qui s'étend au moins jusqu'au voisinage immédiat de l'oreille 3, plus particulièrement de son second pli 3c, et peut même exister partiellement ou totalement sur ce second pli, comme on le voit sur la figure 2.

Au cours du serrage du collier, les bords de l'échancrure 4a sont guidés par la nervure 1b qui, bien évidemment, sera disposée dans le même plan que le bossage 6. Ainsi, la mise en place du collier sera facilitée, le crochet 2 et l'oreille 3 étant guidés l'un vers l'autre, puis centrés l'un par rapport à l'autre au moment de l'agrafage.

La variante représentée sur les figures 3 et 4 présente substantiellement la même structure que celle visible sur les figures 1 et 2. Les éléments déjà décrits portent les mêmes références augmentées de 10.

Le bossage 16 comporte une surface supérieure axiale 16c, sensiblement parallèle à la bande 11 et sa face frontale 16b, de préférence plane, se raccorde à la bande en 16a, bien en avant (à droite sur la figure 4) du pli 13a de l'oreille et de son creux 13b. La base de cette face frontale 16b ainsi que la face frontale elle-même sont, de préférence, sensiblement perpendiculaires à la bande 11 et s'étendent sur une distance relativement importante, par exemple voisine des deux tiers de la largeur de la bande. Ainsi qu'on le voit bien sur la figure 3, le bossage 16, et notamment sa section par un plan parallèle au plan tangent à la bande dans la région de l'oreille 13, ont une forme générale en T.

Cependant, la surface supérieure 16e des branches latérales 16d du bossage en T sont inclinées vers le creux 13b, c'est-à-dire vers la base de l'oreille 13. Cette disposition est particulièrement visible sur la figure 4.

La mise en place et le serrage du collier s'effectuent de la même façon que celle qui a été décrite en référence aux figures 1 et 2, et présentent les mêmes avantages.

Toutefois, il convient de souligner que la forme très proéminente du bossage 16, ainsi que les dimensions relativement importantes de sa face frontale plane 16b, permettent l'utilisation, comme outil de serrage, d'une "pince universelle" B dont le profil est schématiquement représenté en trait ponctué sur la figure 4.

D'autre part, l'inclinaison des surfaces supérieures 16e des branches latérales 16d du bossage permet de glisser facilement la lame d'un tournevis, jusqu'à ce qu'elle atteigne le creux 13b de l'oreille. En faisant levier avec le manche du tournevis dont la lame s'appuie sur l'une des branches latérales 16d, on peut soulever l'extrémité 14 du crochet 12 et dégrafer ce dernier de l'oreille 13.

## Revendications

1. Collier de serrage comportant une bande métallique (1) enroulée sur elle-même, dont l'une des extrémités est conformée en crochet (2) et dont l'autre extrémité présente une oreille saillante (3) permettant l'agrafage du bord libre (4) du crochet caractérisé en ce que l'oreille (3) présente un bossage (6) sur sa face frontale (5) servant d'appui au bord libre (4) du crochet après agrafage, ce bossage étant situé, de préférence, sensiblement au milieu de la largeur de l'oreille, cependant que le bord libre (4) du crochet comporte une échancrure (4a) de forme complémentaire de celle du bossage dans sa zone de raccordement à l'oreille.

2. Collier de serrage selon la revendication 1, dans lequel la bande comporte un prolongement (1a) s'étendant au-delà de l'oreille (3), caractérisé en ce que ledit prolongement (1a) présente une nervure (1b) faisant saillie sur sa face extérieure, s'étendant au moins jusqu'au voisinage immédiat de l'oreille (3) et située sensiblement dans le même plan que le bossage (6) de l'oreille.

3. Collier de serrage selon la revendication 2, dans lequel l'oreille est constituée par deux plis (3a) et (3c) de la bande adossés l'un à l'autre, caractérisé en ce que la nervure (1b) s'étend au moins en partie sur le pli (3c) de l'oreille, situé du côté du crochet (2) avant son agrafage.

4. Collier de serrage selon l'une quelconque des revendications précédentes, caractérisé en ce que la face frontale (6b) du bossage est sensiblement transversale et perpendiculaire à la bande et s'étend sur une hauteur voisine de celle de l'oreille.

5. Collier de serrage selon la revendication 4, caractérisé en ce que la face frontale (16b) du bossage présente une dimension transversale importante, de préférence voisine des deux tiers de la largeur de la bande.

6. Collier de serrage selon la revendication 5, caractérisé en ce que le bord supérieur de l'une au moins des parties latérales de la face frontale (16b) se raccorde à une surface (16e) inclinée vers la base (13b) de l'oreille (13).

## Patentansprüche

1. Schlauchklemme mit einem aufgerollten Metallband (1), dessen eines Ende in Form eines Hakens (2) ausgebildet ist und dessen anderes Ende einen abstehenden Ansatz (3) aufweist, um die Verhakung des freien Randes (4) des Hakens zu gestatten, dadurch gekennzeichnet, daß der Ansatz (3) auf seiner Stirnseite (5) einen als Auflage für den freien Rand (4) des Hakens nach der Verhakung dienenden Wulst (6) aufweist, welcher Wulst sich vorzugsweise im wesentlichen in der Mitte der Breite des Ansatzes befindet, während der freie Rand (4) des Hakens einen Einschnitt (4a) von zur Form des Wulstes in seiner Verbindungszone mit dem Ansatz komplementärer Form aufweist.

2. Schlauchklemme nach Anspruch 1, bei welcher das Band eine über den Ansatz (3) hinausreichende Verlängerung (1a) aufweist, dadurch gekennzeichnet, daß die Verlängerung (1a) eine an ihrer Außenseite abstehende Rippe (1b) aufweist, die sich zumindest bis in unmittelbare Nähe des Ansatzes (3) erstreckt und im wesentlichen in derselben Ebene wie der Wulst (6) des Ansatzes liegt.

3. Schlauchklemme nach Anspruch 2, bei welcher der Ansatz aus zwei Rücken an Rücken angeordneten Aufbiegungen (3a) und (3c) des Bandes gebildet ist, dadurch gekennzeichnet, daß sich die Rippe (1b) zumindest teilweise über die Auffaltung (3c) des Ansatzes erstreckt, die sich vor der Verhakung auf der Seite des Hakens (2) befindet.

4. Schlauchklemme nach einem der vorhergehenden Ansprüche, dadurch gekennzeichnet, daß die Stirnseite (6b) des Wulstes im wesentlichen quer und senkrecht zum Band verläuft und sich über eine Höhe ähnlich jener des Ansatzes erstreckt.

5. Schlauchklemme nach Anspruch 4, dadurch gekennzeichnet, daß die Stirnseite (16b) des Wulstes eine bedeutende Querdimension, vorzugsweise im Bereich von zwei Dritteln der Breite des Bandes, aufweist.

6. Schlauchklemme nach Anspruch 5, dadurch gekennzeichnet, daß der obere Rand zumindest eines der seitlichen Teile der Stirnseite (16b) in eine zur Basis (13b) des Ansatzes (13) geneigte Oberfläche (16e) übergeht.

## Claims

1. Clamp comprising a metal band (1) wound on itself, of which one of the ends is shaped as a hook (2) and of which the other end has a projecting lug (3) allowing fastening of the free edge (4) of the hook, characterized in that the lug (3) presents a boss (6) on its front face (5) acting as a bearing surface for the free edge (4) of the hook after fastening, said boss preferably being located substantially in the middle of the width of the lug, while the free edge (4) of the hook comprises a notch (4a) whose shape is complementary to that of the boss in its zone of connection to the lug.

2. Clamp according to claim 1, in which the band comprises an extension (1a) extending beyond the lug (3), characterized in that said extension (1a) presents a rib (1b) projecting on its outer face, extending at least up to the immediate vicinity of the lug (3) and situated substantially in the same plane as the boss (6) of the lug.

3. Clamp according to claim 2, in which the lug is constituted by two folds (3a) and (3c) of the band back to back, characterized in that the rib (1b) extends at least partly on the fold (3c) of the lug, located on the side of the hook (2) before fastening thereof.

4. Clamp according to any one of the preceding claims, characterized in that the front face (6b) of the boss is substantially transverse and perpendicular to the band and extends over a height close to that of the lug.

5. Clamp according to claim 4, characterized in that the front face (16b) of the boss presents a large transverse dimension, preferably close to two thirds of the width of the band.

6. Clamp according to claim 5, characterized in that the upper edge of at least one of the lateral parts of the front face (16b) joins a surface (16e) inclined towards the base (13b) of the lug (13).

Fig-1

2

4a

4

1a

1b

3

5

6c

6b

6

1

Fig-2

2

3

6c

1b

3c

6

A

1a

3a

3b

4

6b

6a

1

Fig-3

12

14a

11a

14

13

11b

16c

15

16d

16d

16b

16e

11

Fig-4

12

13

16

11b

13c

14

16c

B

13a

16e

16b

11a

13b

16a

11